# FASCICULE DE BREVET EUROPEEN

(11) **EP 0 610 636 B1**
(45) Date de publication et mention de la délivrance du brevet: **08.01.1997**
(21) Numéro de dépôt: 93402966.1
(22) Date de dépôt: 08.12.1993
(51) Int. Cl.: F16L 21/035, F16L 59/18, F23J 13/02, F23J 13/04

(54) **Elément tubulaire pour conduit de gaz chaud**
Rohrelement für heisse Gase führende Leitung
Tubular element for hot gas conduit

(30) Priorité: 08.02.1993 FR 9301367
(43) Date de publication de la demande: 17.08.1994
(73) Titulaire: ETABLISSEMENTS POUJOULAT, F-79360 Beauvoir sur Niort (FR)
(72) Inventeur: Murzeau, Jack, F-79000 Niort (FR)
(74) Mandataire: Michelet, Alain

(56) Documents cités:
- EP-A- 0 007 651
- EP-A- 0 398 831
- EP-A- 0 424 617
- FR-A- 2 566 095
- US-A- 3 656 784

## Description

L'invention concerne un élément tubulaire pour un conduit de gaz chaud et un conduit de gaz chaud obtenu par emmanchement d'au moins deux de ces éléments tubulaires.

Habituellement, les gaz chauds, comme par exemple la fumée provenant d'une chaudière, circulent dans des conduits obtenus par simple emmanchement de deux ou plusieurs éléments tubulaires en aluminium ou en acier. Lorsque la température des gaz dépasse une certaine valeur, l'étanchéité du conduit est mal assurée. On constate alors des entrées d'air, par aspiration, à travers les raccords formés par les extrémités correspondantes des éléments emmanchés.

De tels appels d'air inopportuns ont des influences défavorables sur les caractéristiques des gaz chauds. Il en résulte notamment que les valeurs réglementaires, imposées par la législation ou la réglementation concernant les émissions de fumées, ne peuvent plus être garanties.

Le document US-A-3.656.784 décrit un élément tubulaire pour un conduit de gaz chaud, notamment pour des conduits de gaz d'échappement de moteur d'avion. Cet élément tubulaire connu comporte une première extrémité et une deuxième extrémité, la deuxième extrémité étant pourvue d'un évasement destiné à recevoir, par emmanchement, la première extrémité d'un autre élément tubulaire. La première extrémité est munie de deux nervures annulaires de diamètres différents et disposées à une distance axiale l'une de l'autre et à une distance du bord de cette première extrémité. Lorsque deux éléments tubulaires sont emmanchés l'un dans l'autre pour former un conduit de gaz chaud, un joint d'étanchéité à section transversale en forme de L et préformé en un matériau composite de graphite et d'amiante est interposé entre les deux extrémités et disposé circonférentiellement entre les deux nervures annulaires de la première extrémité. De plus, le joint d'étanchéité est tenu par un élément annulaire élastique qui, pour sa part, est maintenu en place par la nervure annulaire de plus petit diamètre et qui exerce une force de ressort sur le joint.

Le document EP-A-0.424.617 décrit un conduit de fumée et de gaz chaud comportant une pluralité d'éléments tubulaires dont chacun comprend une première extrémité et une deuxième extrémité, la deuxième extrémité étant pourvue d'un évasement destiné à recevoir, par emmanchement, la première extrémité d'un autre élément tubulaire. Un joint d'étanchéité en un matériau céramique tissé ou nappé (non-tissé) est disposé entre les deux extrémités emmanchées l'une dans l'autre.

L'épaisseur du joint céramique est choisie supérieure au jeu entre les deux extrémités commandées.

Le but de l'invention est de proposer un élément tubulaire pour un conduit de gaz chaud permettant de remédier aux inconvénients précités.

L'objet de l'invention est un élément tubulaire pour un conduit de gaz chaud, comportant une première extrémité et une deuxième extrémité, la deuxième extrémité étant pourvue d'un évasement destiné à recevoir, par emmanchement, la première extrémité d'un autre élément tubulaire, en vue de former un conduit de gaz chaud.

Conformément à l'invention, la première extrémité de l'élément tubulaire est munie de deux nervures annulaires disposées à une distance axiale l'une de l'autre, et d'un joint d'étanchéité céramique, disposé circonférentiellement entre les deux nervures annulaires.

Pour éviter que le joint céramique ne s'enroule sur lui-même lors de l'emmanchement de l'élément tubulaire dans un autre, la section du joint est de forme générale allongée. La section de ce joint est avantageusement de forme rectangulaire, éventuellement avec des coins arrondis ou de forme elliptique.

Dans le cas d'un joint céramique à section elliptique, le rapport entre la grande dimension et la petite dimension est, de préférence, supérieur à 3.

L'invention concerne également les caractéristiques ci-après, considérées isolément ou selon toutes leurs combinaisons techniquement possibles:
- L'élément tubulaire est à double paroi; il comporte une paroi intérieure et une paroi extérieure solidaires l'une de l'autre et définissant un espace intermédiaire. La paroi intérieure est conforme à l'élément tubulaire à simple paroi décrit plus haut.
- L'espace intermédiaire est rempli d'un matériau isolant.
- La première extrémité n'est couverte ni par le matériau isolant ni par la paroi extérieure.

Pour obtenir cette disposition, la paroi extérieure peut être fixée à l'élément tubulaire intérieur par des collerettes obtenues à partir d'une bande métallique sans fin, dans laquelle on a pratiqué des encoches avant de la plier, de la rouler en structure annulaire, de la souder et de former des saillants destinés à l'adaptation avec les éléments tubulaires intérieur et extérieur, comme cela est décrit, par exemple, dans le brevet français FR 2.644.870.
- La paroi extérieure comporte des moyens destinés à coopérer avec un élément de fixation apte à fixer, de façon amovible, l'élément tubulaire à un autre élément tubulaire après avoir emmanché les deux éléments tubulaires l'un dans l'autre.
- L'élément de fixation est un collier à fermeture rapide.
- Le joint est réalisé en un matériau céramique tressé.
- La grande dimension de la section du joint céramique est inférieure à la distance axiale entre les deux nervures annulaires.
- L'une des deux nervures annulaires est obtenue par emboutissage du bord définissant l'entrée de l'élément tubulaire, alors que l'autre des deux nervures annulaires est obtenue par moulurage de la première extrémité sensiblement transversalement par rapport à l'axe longitudinal de l'élément tubulaire.
- L'élément tubulaire est en acier inoxydable.
- L'élément tubulaire est coudé.

L'invention a également pour objet un conduit de gaz chaud obtenu par emmanchement d'au moins un premier élément tubulaire dans un deuxième élément tubulaire du genre décrit ci-avant.

Divers avantages et caractéristiques de l'invention ressortiront de la description d'un exemple de réalisation de l'élément tubulaire selon l'invention en se référant aux dessins. Dans ces dessins,
la Figure 1 montre un élément tubulaire dans un premier mode de réalisation de l'invention,
la Figure 2 montre un élément tubulaire dans un deuxième mode de réalisation de l'invention,
la Figure 3 montre la zone de jonction d'un conduit de gaz chaud obtenu par emmanchement de deux éléments tubulaires selon la Figure l, et
la Figure 4 montre la zone de jonction d'un conduit de gaz chaud obtenu par emmanchement de deux éléments tubulaires selon la Figure 2.

La Figure l montre, comme premier mode de réalisation avantageux de l'invention, un élément tubulaire droit l, à section circulaire autour d'un axe de symétrie A, en acier inoxydable. L'élément tubulaire l, appelé par la suite tube, présente une première extrémité 2 et une deuxième extrémité 3. Il a un diamètre habituellement compris entre 125 mm et 600 mm et une longueur située entre environ 100 mm et 1400 mm.

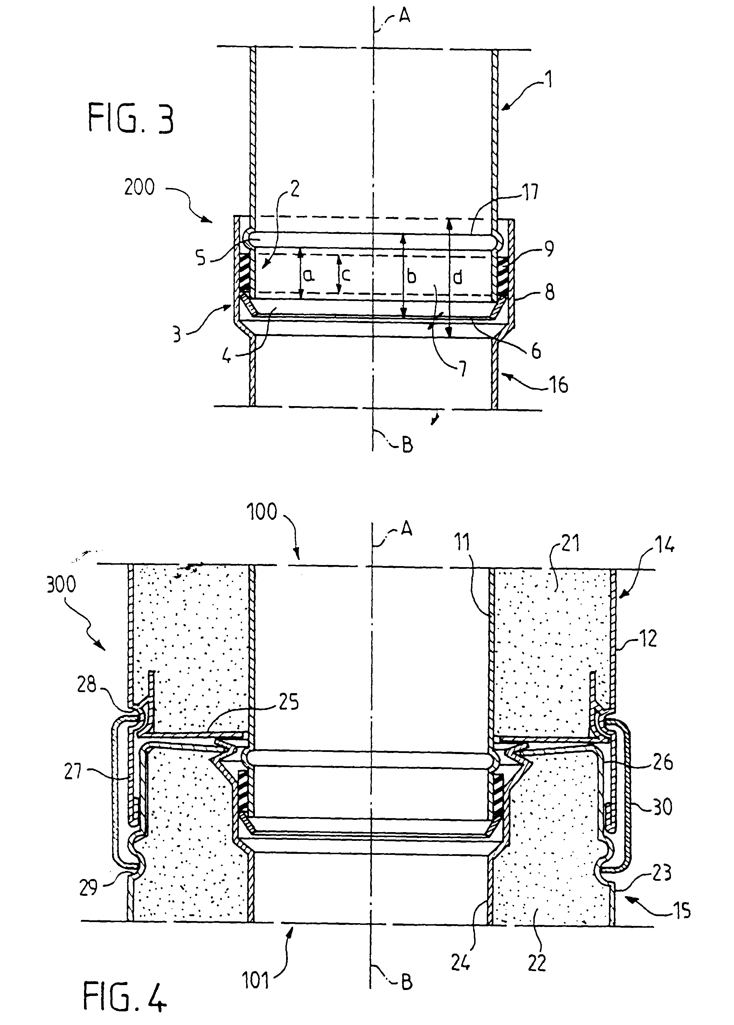

La première extrémité 2 du tube 1 est munie de deux nervures annulaires 4 et 5. La première nervure annulaire 4 est obtenue par emboutissage de la première extrémité 2 au niveau d'un bord 6 qui définit l'entrée du tube 1. La deuxième nervure annulaire 5 est obtenue par moulurage de la première extrémité 2 à une distance axiale de la première nervure, mesurée sur une partie non déformée 7 de l'extrémité 2, référencée dans la Figure 3 par la lettre a.

La deuxième extrémité 3 du tube 1 possède un évasement 8 permettant à l'extrémité 3 de recevoir, lors de l'emmanchement de deux tubes l'un dans l'autre, la première extrémité 2 de l'autre tube.

Il est bien entendu que l'invention n'est pas limitée aux éléments tubulaires droits à section circulaire. Il est alors également concevable que l'élément tubulaire soit coudé ou/et soit à section sensiblement elliptique, sans sortir du principe de la présente invention.

Pour assurer une étanchéité sûre de la jonction de deux tubes emmanchés l'un dans l'autre, même à des températures élevées des gaz, notamment à des températures supérieures à 500 °C, la première extrémité 2 est munie d'un joint 9 en céramique tressée. Le joint 9 est placé circonférentiellement entre les deux nervures 4 et 5. Pour le transport et le montage, le joint 9 peut être maintenu par un adhésif qui se détruit à la montée de la température, au moment où le joint est serré entre les deux extrémités correspondantes 2 et 3.

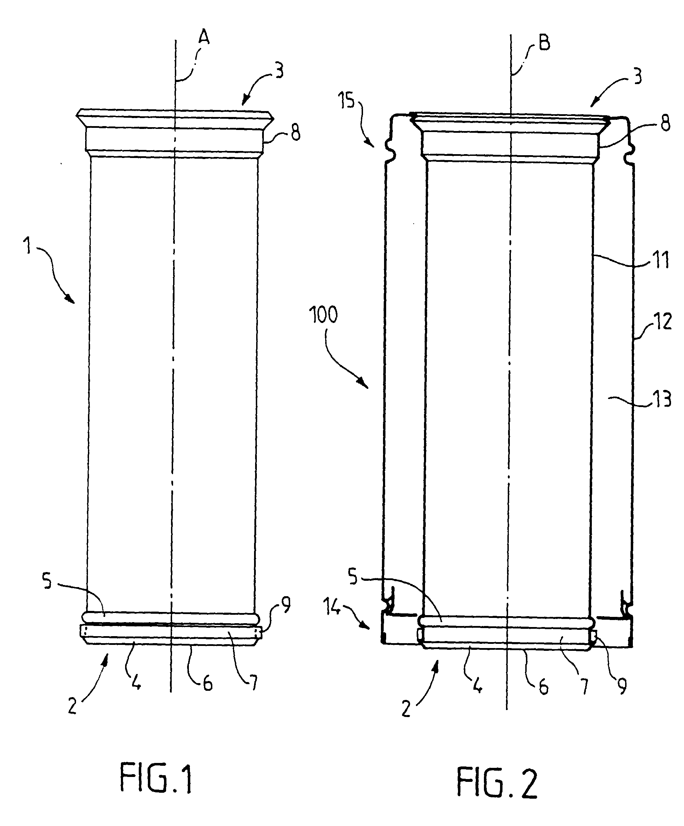

La Figure 2 montre, comme deuxième mode de réalisation avantageux de l'invention, un élément tubulaire droit 100, à section circulaire autour d'un axe de symétrie B, en acier inoxydable. Cet élément tubulaire 100 est constitué essentiellement d'une paroi intérieure ll et d'une paroi extérieure 12. La paroi intérieure ll et la paroi extérieure 12 définissent un espace intermédiaire 13 pouvant être rempli d'un matériau isolant.

Par ailleurs, l'élément tubulaire 100 présente une première extrémité 14 et une deuxième extrémité 15. Les caractéristiques de ces deux extrémités sont définies à la fois par celles des extrémités 2 et 3 de la paroi intérieure ll et par celles des extrémités de la paroi extérieure 12.

Conformément à l'invention, la paroi intérieure ll a la même structure que le tube l représenté sur la Figure l. Pour cette raison, la description du tube l donnée plus haut s'applique également à la paroi ll. De même, les numéros de référence 2 à 9 qui désignent les différentes parties du tube l et le joint céramique, sont utilisés pour désigner les parties identiques de la paroi intérieure et le joint céramique de l'élément tubulaire 100.

Ainsi, la première extrémité 2 de la paroi intérieure ll est munie de deux nervures annulaires 4 et 5. La première nervure annulaire 4 est obtenue par emboutissage de la première extrémité 2 au niveau d'un bord 6 qui définit l'entrée de l'élément tubulaire 100. La deuxième nervure annulaire 5 est obtenue par moulurage de la première extrémité 2 à une distance axiale de la première nervure, mesurée sur la partie non déformée 7 de l'extrémité 3, référencée dans la Figure 2 par la lettre a.

La deuxième extrémité 3 de la paroi intérieure ll possède un évasement 8 permettant à l'extrémité 3 de recevoir, lors de l'emmanchement de deux éléments tubulaires l'un dans l'autre, la première extrémité 2 de la paroi intérieure de l'autre élément tubulaire.

La première extrémité 2 est munie d'un joint 9 en céramique tressée. Le joint 9 est placé circonférentiellement entre les deux nervures 4 et 5. Pour le transport et le montage, le joint 9 peut être maintenu par un adhésif qui se détruit à la montée de la température, au moment où le joint est serré entre les deux extrémités correspondantes 2 et 3.

Dans les deux modes de réalisation de l'invention, le joint 9 a, comme les Figures l et 2 le montrent, une section rectangulaire. La section rectangulaire du joint 9 permet d'éviter un roulage sur lui-même lors de l'emmanchement d'un élément tubulaire dans un autre. Dans la majorité des applications, le rapport entre la largeur du joint 9, référencée dans la Figure 3 par la lettre c, et l'épaisseur du joint 9 est supérieur à 3. Un exemple typique est un joint céramique de 10 x 3 mm.

La distance axiale a entre les deux nervures 4 et 5 est choisie supérieure à la largeur c du joint 9 pour tenir compte de la dilatation du joint lors de l'utilisation du tube l, ou respectivement de l'élément tubulaire 100, à des températures élevées.

Dans cette même optique, le dénivellement que les nervures 4 et 5 présentent par rapport à la partie non déformée 7 de la première extrémité 2, est choisi de façon à limiter la translation du joint 9 lors de l'utilisation du tube 1 à des températures élevées.

La Figure 3 montre une jonction d'un conduit de gaz chaud 200 obtenu par emmanchement de deux tubes selon l'invention dont l'un est référencé en l et l'autre en 16. La jonction est formée par la première extrémité 2 du tube l et la deuxième extrémité 3 du tube 16.

La longueur de la première extrémité 2, mesurée le long de l'axe de symétrie A ou respectivement B est la distance b entre le bord 6 de la première extrémité 2 et la limite 17 de la deuxième nervure 5 orientée vers la deuxième extrémité 3.

La longueur de l'évasement 8 de la deuxième extrémité 3 du deuxième tube 16, mesurée selon l'axe longitudinal B de ce tube et référencée sur la Figure 3 en d, est supérieure à la longueur axiale b de la première extrémité 2 du premier tube l. Cette disposition permet de tenir compte de la dilatation du tube 1 lors de l'utilisation du conduit de gaz chaud 200 à des températures élevées.

La Figure 4 montre une jonction d'un conduit de gaz chaud 300 obtenu par emmanchement de deux éléments tubulaires selon l'invention dont l'un est référencé en 100 et l'autre en 101. La jonction est formée par la première extrémité 14 de l'élément tubulaire 100 et la deuxième extrémité 15 de l'élément tubulaire 101.

Le conduit de gaz chaud 300 est représenté sur la Figure 4 avec un isolement thermique. Cet isolement thermique est formé, en général, à partir de laine de roche, de laine céramique ou analogue.

Le premier élément tubulaire 100 est revêtu extérieurement d'un premier isolant 21 tenu en place par la paroi extérieure 13, appelée par la suite enveloppe, solidaire du tube 11. L'enveloppe 12 est sensiblement cylindrique de révolution et conserve à l'isolant une épaisseur la plus constante possible.

Le deuxième élément tubulaire 101 est revêtu extérieurement d'un deuxième isolant 22 tenu en place par la paroi extérieure 23, appelée par la suite enveloppe, solidaire de la paroi intérieure de l'élément tubulaire 101. La paroi intérieure de l'élément tubulaire 101 est référencée sur la Figure 4 en 24. L'enveloppe 23 est sensiblement cylindrique de révolution et d'un diamètre correspondant sensiblement à celui de l'enveloppe 12.

L'élément tubulaire 100 du tube simple et l'élément tubulaire 101 du tube double paroi ont la même structure, au moins en ce qui concerne leurs zones de jonction correspondantes; dans ce qui suit, les mêmes références sont utilisées pour ces deux éléments tubulaires.

La longueur axiale de l'enveloppe 12 est donnée par le positionnement de deux collerettes d'adaptation 25 et 26 disposées transversalement par rapport à l'axe A de l'élément tubulaire 100. La longueur de l'enveloppe 12 est choisie telle que la première extrémité 2 ne soit pas couverte du matériau isolant ni de l'enveloppe 12.

Pour permettre une protection efficace de la jonction des éléments tubulaires 100 et 101 contre l'intrusion de corps nuisibles, l'enveloppe 12 peut être prolongée, à concurrence de la longueur axiale d de la première extrémité 2, par une jupe 27. La jupe 27 peut être formée en une seule pièce avec l'enveloppe 12. Pour faciliter un positionnement correct de la collerette 28, l'enveloppe 12 peut être munie d'une première gorge 28 obtenue par moulurage de l'enveloppe.

La deuxième enveloppe 23 du deuxième élément tubulaire 101 est munie, par exemple à un niveau transversal de l'élément tubulaire 101 correspondant à la transition entre la paroi de ce dernier et la deuxième extrémité 15, d'une deuxième gorge 29. La deuxième gorge 29 est destinée à recevoir, ensemble avec la première gorge 28, un collier 30.

Le collier 30 est une attache annulaire à fermeture rapide. Sa section en forme générale d'un "C" permet à la fois un assemblage rigide des deux éléments tubulaires 100 et 101, et le bénéfice de l'élasticité du collier pour maintenir les deux éléments tubulaires ensembles, même sous l'influence de contraintes mécaniques.

Le positionnement du joint céramique 9 par rapport aux isolants 21 et 22, et notamment la limitation de la translation possible du joint par la nervure 5, est choisi de manière à éviter le contact du joint avec l'isolant et, de ce fait, à rendre impossible l'absorption de liquide, en général de condensat, de l'isolant par capillarité.

Par ailleurs, l'évasement 8 est formé de manière à permettre, outre le maintient de l'élément tubulaire emmanché, le coulissement du joint 9 lors de sa dilatation, entre les éléments emmanchés.

Les signes de référence insérés après les caractéristiques techniques mentionnées dans les revendications, ont pour seul but de faciliter la compréhension de ces dernières, et n'en limitent aucunement la portée.

## Revendications

1. Elément tubulaire (1) pour un conduit de gaz chaud, comportant une première extrémité (2) et une deuxième extrémité (3), la deuxième extrémité (3) étant pourvue d'un évasement (8) destiné à recevoir, par emmanchement, la première extrémité d'un autre élément tubulaire (16) en vue de former un conduit de gaz chaud, la première extrémité (2) étant munie de deux nervures annulaires (4, 5) disposées à une distance axiale (a) l'une (4) de l'autre (5), et un joint d'étanchéité (9) étant disposé circonférentiellement entre les deux nervures annulaires (4, 5), caractérisé en ce que le joint (9) est réalisé en un matériau céramique tressé.

2. Elément tubulaire selon la revendication 1, caractérisé en ce que la grande dimension (b) de la section du joint (9) céramique est inférieure à la distance axiale (a) entre les deux nervures annulaires (4, 5).

3. Elément tubulaire selon la revendication 1 ou 2, caractérisé en ce que l'une (4) des deux nervures annulaires est obtenue par emboutissage d'un bord (6) définissant une entrée de l'élément tubulaire (1), et en ce que l'autre (5) des deux nervures annulaires est obtenue par moulurage de la première extrémité (2) sensiblement transversalement par rapport à l'axe longitudinal (A) de l'élément tubulaire (1).

4. Elément tubulaire selon l'une quelconque des revendications 1 à 3, caractérisé en ce qu'il est en acier inoxydable.

5. Elément tubulaire selon l'une quelconque des revendications 1 à 4, caractérisé en ce qu'il est coudé.

6. Elément tubulaire (100) à double paroi pour un conduit de gaz chaud comportant une paroi intérieure (11) et une paroi extérieure (12) solidaires l'une de l'autre et définissant un espace intermédiaire (13), caractérisé en ce que la paroi intérieure (11) est un élément tubulaire conforme à la revendication 1.

7. Elément tubulaire à double paroi selon la revendication 6, caractérisé en ce que l'espace intermédiaire (13) est rempli d'un matériau isolant (21; 22).

8. Elément tubulaire selon la revendication 6 ou 7, caractérisé en ce que la première extrémité (2) n'est pas couverte du matériau isolant (21) ni de la paroi extérieure (12).

9. Elément tubulaire selon l'une quelconque des revendications 6 à 8, caractérisé en ce que la paroi extérieure (12) comporte des moyens (28; 29) destinés à coopérer avec un élément de fixation (30) apte à fixer, de façon amovible, l'élément tubulaire (1; 100) à un autre élément tubulaire (16; 101) après avoir emmanché les deux éléments tubulaires l'un dans l'autre.

10. Elément tubulaire selon la revendication 9, caractérisé en ce que l'élément de fixation (30) est un collier à fermeture rapide.

11. Conduit de gaz chaud (200; 300) obtenu par emmanchement d'au moins un premier élément tubulaire (1; 100) dans un deuxième élément tubulaire (16; 101), les éléments tubulaires (1, 16; 100, 101) étant conformes à l'une quelconque des revendications 1 à 10.

## Patentansprüche

1. Rohrelement (1) für eine heiße Gase führende Leitung, mit einem ersten Ende (2) und einem zweiten Ende (3), wobei das zweite Ende (3) mit einer trompetenartigen Erweiterung (8) versehen ist, die dazu bestimmt ist, das erste Ende eines anderen Rohrelements (16) in einer Steckverbindung zur Bildung einer heiße Gase führenden Leitung aufzunehmen, und wobei das erste Ende (2) mit zwei Ringrippen (4, 5) versehen ist, die in einem axialen Abstand (a) voneinander angeordnet sind, und eine Dichtung (9) zwischen den beiden Ringrippen (4, 5) am Umfang angeordnet ist, dadurch gekennzeichnet, daß die Dichtung (9) aus einem geflochtenen keramischen Material gebildet ist.

2. Rohrelement nach Anspruch 1, dadurch gekennzeichnet, daß die große Abmessung (b) des keramischen Dichtungsabschnitts (9) kleiner ist als der axiale Abstand (a) zwischen den beiden Ringrippen (4, 5).

3. Rohrelement nach Anspruch 1 oder 2, dadurch gekennzeichnet, daß die eine (4) der beiden ringförmigen Rippen durch Verpressen eines Randes (6) erhalten ist, der einen Einlauf des Rohrelements (1) bildet, und daß die andere (5) der beiden ringförmgien Rippen durch Ausdrücken des ersten Endes (2) im wesentlichen in Querrichtung bezogen auf die Längsachse (A) des Rohrelements (1) gebildet ist.

4. Rohrelement nach einem der Ansprüche 1 bis 3, dadurch gekennzeichnet, daß es aus nichtrostendem Stahl besteht.

5. Rohrelement nach einem der Ansprüche 1 bis 4, dadurch gekennzeichnet, daß es gebogen ist.

6. Doppelwandiges Rohrelement (100) für eine heiße Gase führende Leitung, umfassend eine Innenwand (11) und eine Außenwand (12), die fest miteinander verbunden sind und einen Zwischenraum (13) bilden, dadurch gekennzeichnet, daß die Innenwand (11) ein Rohrelement gemäß Patentanspruch 1 ist.

7. Doppelwandiges Rohrelement nach Anspruch 6, dadurch gekennzeichnet, daß der Zwischenraum (13) mit Isoliermaterial (21; 22) gefüllt ist.

8. Rohrelement nach Anspruch 6 oder 7, dadurch gekennzeichnet, daß das erste Ende (2) weder mit Isoliermaterial (21) noch von der Außenwand (12) überdeckt ist.

9. Rohrelement nach einem der Ansprüche 6 bis 8, dadurch gekennzeichnet, daß die Außenwand (12) Einrichtungen (28; 29) umfaßt, die dazu bestimmt sind, mit einem Befestigungselement (30) zusammenzuwirken, welches dazu geeignet ist, das Rohrelement (1; 100) mit einem weiteren Rohrelement (16; 101) unbeweglich zu verbinden, nachdem die beiden Rohrelemente ineinander eingesteckt worden sind.

10. Rohrelement nach Anspruch 9, dadurch gekennzeichnet, daß das Befestigungselement (30) eine Schnellbefestigungsschelle ist.

11. Leitung zum Führen heißer Gase (200; 300), erhalten durch das Zusammenstecken wenigstens eines ersten Rohrelements (1; 100) in ein zweites Rohrelement (16; 101), wobei die Rohrelemente (1, 16; 100, 101) entsprechend einem der Ansprüche 1 bis 10 ausgebildet sind.

## Claims

1. A tubular element (1) for hot gas conduit, comprising a first end (2) and a second end (3), whereby the second end (3) is provided with a bell-mouth (8) designed for accommodating, by stocking, the first end of another tubular element (16) in order to form a hot gas conduit, whereas the first end (2) is fitted with two ring-shaped ribs (4, 5) arranged at axial distance (a) one (4) from another (5) and wheras a gasket (9) has been placed on the circumference between both ring-shaped ribs (4, 5) characterised in that the gasket (9) is made of a braided ceramic material.

2. A tubular element according to claim 1, characterised in that the greater size (b) of the section of the ceramic gasket (9) is smaller than the axial distance (a) between both ring-shaped ribs (4, 5).

3. A tubular element according to claim 1 or 2, characterised in that one (4) of both ring-shaped ribs is obtained by embossing a rim (6) defining an inlet to the tubular element (1) and in that the other one (5) of both ring-shaped ribs is obtained by moulding the first end (2) more or less at right angles with respect to the longitudinal axis (A) of the tubular element (1).

4. A tubular element according to any of the claims 1 to 3, characterised in that it is made of stainless steel.

5. A tubular element according to any of the claims 1 to 4, characterised in that it is elbowed.

6. A tubular element (100) fitted with a double wall for a hot gas conduit comprising an inner wall (11) and an outer wall (12) connected rigidly together and defining an intermediate space (13), characterised in that the inner wall (11) is a tubular element in compliance with the claim 1.

7. A double-walled tubular element according to the claim 6, characterised in that the intermediate space (13) is filled with an insulating material (21; 22).

8. A tubular element according to the claim 6 or 7, characterised in that the first end (2) is not covered by the insulating material (21) nor by the outer wall (12).

9. A tubular element according to any of the claims 6 to 8, characterised in that the outer wall (12) comprises means (28; 29) designed for working together with a fastening element (30) capable of fixing, in a removable way, the tubular element (1; 100) to another tubular element (16; 101) after having stocked both tubular elements one into the other.

10. A tubular element according to the claim 9, characterised in that the fastening element (30) is a quick-release collar.

11. A hot gas conduit (200; 300) obtained by stocking at least a first tubular element (1; 100) into a second tubular element (16; 101), whereby both tubular elements (1, 16; 100, 101) are in compliance with any of the claims 1 to 10.
